# NEW EUROPEAN PATENT SPECIFICATION

(11) **EP 0 261 127 B2**
(45) Date of publication and mention of the opposition decision: **20.07.2005**
(45) Mention of the grant of the patent: 27.12.1989
(21) Application number: 86903722.6
(22) Date of filing: 25.03.1986
(51) Int. Cl.: H04B 1/66

(54) **TDM COMMUNICATION SYSTEM FOR EFFICIENT SPECTRUM UTILIZATION**
ZEITMULTIPLEXKOMMUNIKATIONSSYSTEM ZUR LEISTUNGSFÄHIGEN AUSNUTZUNG DES SPEKTRUMS
SYSTEME DE COMMUNICATION A MULTIPLEXAGE TEMPOREL PERMETTANT UNE UTILISATION EFFICACE DU SPECTRE DES FREQUENCES

(43) Date of publication of application: 30.03.1988
(73) Proprietor: MOTOROLA, INC., Schaumburg, IL 60196 (US)
(72) Inventor: LYNK, Charles, Nelson, Jr., Bedford, TX 76022 (US); SCHORMAN, Eric, Reed, Bedford, TX 76021 (US); LINDER, Donald, L., Palatine, IL 60067 (US)
(74) Representative: Grünecker, Kinkeldey, Stockmair & Schwanhäusser Anwaltssozietät; Hudson, Peter David
(86) International application number: PCT/US1986/000618
(87) International publication number: WO 1987/006083

(56) References cited:
- EP-A- 0 115 618
- EP-A- 0 145 097
- EP-A- 0 169 713
- WO-A-84/00455
- US-A- 3 529 243
- US-A- 3 646 441
- K. Kinoshita et al., "Digital Mobile Telephone System Using TD/FDMA Scheme", IEEE Transactions on Vehicular Technology, Vol. VT-31, No. 4, November 1982, pages 153 to 157
- CCITT Red Book, Vol. VII - Fascicle VII.1, "Telegraph Transmission", Recommendation R.101, "Code and speed dependent TDM system for anisochronous telegraph and data transmission using bit interleaving", Geneva, 1985, pages 95 to 109
- Patents Abstraacts of Japan, vol. 8, no. 142, 3 July 1984, page 1579 (E254) & JP-A-5952931

## Description

### Background of the Invention

This invention relates generally to two-way radio communication and more particularly to time division multiplexed digital communication and is more particularly directed to a communication method for the efficient utilization of the frequency spectrum.

Those skilled in the art will appreciate the congested and crowded nature of the available frequency spectrum. The Federal Communication Commission (FCC) have continually sought ways to reallocate the available spectrum or assign previously reserved spectrum to relieve this congestion. This condition is particularly noticeable in metropolitan areas where a large number of radio users are concentrated in a small geographic area. One proposal the FCC is considering is sharing a portion of the UHF television spectrum with the land mobile market (FCC docket 85-172). Another consideration is the reallocation of the land mobile reserve frequencies in the 896-902 MHz region to private land mobile uses (FCC docket 84-1233).

Another alternative for the FCC is to redefine the standard for land mobile communication channels.

Currently, the standard for land mobile communication is a channel having a bandwidth of 25 kHz. However, the FCC may redefine this standard to use 12.5 kHz (or possibly 15 kHz) channels. The theory behind this "band-split" is to effectively double the number of channels in any newly allocated frequency spectrum. Potentially, as "older" spectrum is reallocated, all communications equipment will be required to operate in the 12.5 kHz channel bandwidth.

Although facially attractive, a band-split to double the available number of channels is not without cost. Present day communication devices operate with a sufficient frequency guard-band that protects against adjacent-channel interference (given the frequency stability of the transmitters). Of course, the band-split would also reduce the frequency guard-band tending to lead to higher adjacent-channel interference. Even assuming a greater than a two-to-one improvement in transmitter frequency stability, and high selectivity crystal filters for the receivers, adjacent-channel performance may be degraded by a band-split. Thus, there exists substantial technological barriers that must be overcome to provide a radio with comparable performance specifications at a competitive cost in the marketplace. Reference is made to European Patent Office Publication Number 0115618 Al, which discusses a device for achieving a full-duplex effect between two subscribers (A and B) over a single channel by transmitting in time duplex short bursts of data representing speech. Here, the transmission rate on the communication channel is doubled to achieve the full-duplex effect. Sub-band coding (SBC) at 9.6 kbs is used to convert the speech information into the data blocks for transmission. However there is no indication of how to optimise the communication protocol depending on channel capacity and coding rate. Therefore, a substantial need exists in the market to develop a communication system that will provide an increase in the number of available communication channels that is compatible with present day 25 kHz channel bandwidths.

IEEE Transactions on Vehicular Technology Vol. VT-31 No 4 Nov 1982 pages 153-157 Article by Kinoshita et al describes a mobile radio system utilizing a method for efficiently utilizing the spectrum of radio frequency channels.

### Summary of the Invention

Accordingly, it is an object of the present invention to provide a spectrally efficient communication system. It is a further object of the present invention to provide a communication system readily adaptable to improved coding techniques.

It is a further object of the present invention to provide a communication system that operates using narrow band land mobile communication channels.

These and other objects are met in accordance with the method of claim 1.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings, and the several figures of which like referenced numerals identify like elements, and in which:
Figure 1 is a block diagram of a TDM communication system according to the invention;
Figure 2 is an illustration of the preferred organization of a communication channel;
Figure 3a is an illustration of the preferred organization of the slot overhead for a primary to remote transmission;
Figure 3b is an illustration of the preferred organization of the slot overhead for a remote to primary transmission;
Figure 4 is a block diagram of a remote unit according to the invention;
Figure 5 is a block diagram of a primary unit according to the invention;
Figure 6 is a block diagram of a single frequency primary unit according to the invention;
Figure 7 is a block diagram of the preferred embodiment of the controller of Figures 4-6;
Figures 8a-8c are flow diagrams of the steps executed by the controller of Figure 4;
Figure 9 is a flow diagram of the steps executed by the controller of Figures 6 or 7.

### Detailed Description of the Preferred Embodiment

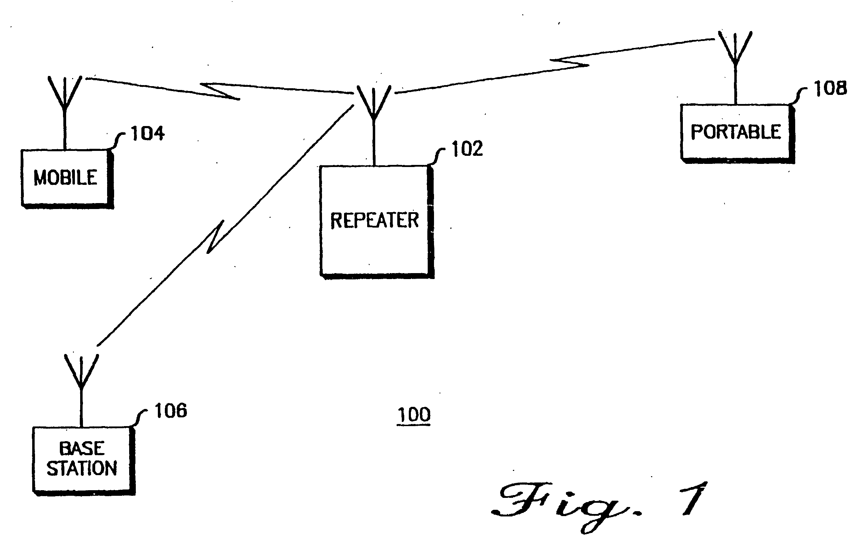

In Figure 1 there is shown a block diagram of the time division multiplexed (TDM) system 100 of the present invention. The system is comprised essentially of a repeater 102, a mobile unit 104, a base station 106 and a portable 108. As used herein, a portable unit (108) is defined to be a communication unit typically designed to be carried about the person. A mobile unit (104) is a transceiving unit designed to be carried in vehicles, and a base station (106) is contemplated to be a permanent or semi-permanent installation at a fixed location. The mobile 104, the base station 106 and the portable unit 108 are hereinafter collectively referred to as remote units, and the repeater 102 is hereinafer referred to as the primary station. The remote units communicate via the primary station using radio frequency (RF) channels that are divided into at least two time slots. The RF channels used by the present invention are contemplated to be standard narrowband land mobile channels. These channels are typically understood to be communication channels having a bandwidth of 25 kHz (for duplex, the channel frequency pairs are spaced 45 MHz apart in the 800 MHz band). Of course, other channel bandwidths and spacings are possible, however, the present invention contemplates the use of standard land mobile channel requirementes thereby obviating the need for any new FCC allocations or requirements.

Those skilled in the art can appreciate that human speech contains a large amount of redundant information. To most efficiently utilize the frequency spectrum it is desirable to remove as much of the redundant information as possible prior to transmission The message is then reconstructed at the receiving end from the transmitted essential speech information. Speech production can be modeled as an excitation signal (i.e., air from the lungs) driving a filter (the vocal tract), which possesses a certain resonant structure. The spoken sound changes with time since the filter varies with time. The excitation is noise-like for unvoiced sounds (i.e., consonants) and appears as a periodic excitation for voiced sounds (for example vowels). Therefore, to reduce the amount of bandwidth required to send a voiced signal, the spectral characteristics of the signal must be analyzed and the nature of the excitation signal must be determined.

Prior communication systems have employed speech digitation techniques such as pulse code modulation (PCM) or continuously variable slope delta (CVSD) modulation to attempt to replicate the time waveforms of the speech signals. However, these techniques suffer the detriment of requiring data rates from 12 kbps to 64 kbps. The current state of the art in land mobile communications is a data rate of 12 kbps to 16 kbps on a 25 kHz channel. This allows the transmission of one voice signal using CVSD. Those skilled in the art will appreciate that the combination of more efficient voice coding (for example coding in the range of 2.4 kbps to 9.6 kbps) and more efficient data transmission (18 kbps to 24 kbps on a 25 kHz channel) would allow the transmission of two or more voice signals in 25 kHz of frequency spectrum.

Prior techniques indicate splitting the communication channels into narrow frequency segments, each being the minimum to allow one digitized voice path. These techniques have two distinct disadvantages. First, narrow channels and wide channels do not mix well within a system so that a gradual transition from wider to narrower channels is accompanied by increased co-channel and adjacent channel interference. Secondly, any particular choice of a narrower standard channel bandwidth "freezes" the state of the art. That is, simply redefining and fixing the standard bandwidth for land mobile communications prohibits advantageous exploitation of technological improvements without another reassignment or redefinition of communication standards.

The present invention keeps the current standard for land mobile communication channels while splitting the time among users according to the fraction of the channel bit rate required for on voice signal. This method has the advantages of preserving the present level of interference protection and allowing splitting (in time) as often as needed to take full advantage of advances in the state of the art of coding and data transmission.

The present invention contemplates vo-coding the voice signal to,minimize the speech data rate. As used herein, vo-coding means the analysis and synthesis of voice, which either utilizes a vocal track model, or quantizes sub-bands of a speech waveform to remove redundant speech information thereby enabling the transmission of the required voice information in a reduced bandwidth.

A typical example of a vo-coder employing a vocal track model is a linear predictive coder (LPC). An LPC analyzer typically operates on blocks of digitized voice, determining the model parameters that are applicable during a particular block, and transmitting these parameters to a synthesizer at the receiving unit. The synthesizer reconstructs the speech signal by using the parameters received. Since the model parameters vary slowly with time compared to the speech waveform, the redundancy of the speech is removed.

A typical example of a vo-coder employing speech sub-band quantitization is a sub-band coder (SBC). In an SBC analyzer, sub-bands of a speech waveform are quantized and a determination is made concerning the amount of speech energy in each sub-band. Only those sub-bands having an energy content above a predetermined threshold are transmitted thereby enabling transmission in a reduced bandwidth. Accordingly, vo-coding provides a further reduction in the speech data rate by using a coding technique based upon specific speech characteristics, transmitting only the perceptually important information contained in a speech signal. Vo-coding allows a sufficiently low speech coding rate to enable the division of a 25 kHz channel bandwidth, thereby providing a spectrally efficient communication system.

Referring now to Figure 2, there is shown an RF communication channel 200 subdivided into 8 time sub-slots. Each time sub-slot 1-8 has associated with it an overhead data portion 202 which contains a signalling protocol to be hereinafter defined. Once the RF channel is divided into a predetermined number of time sub-slots (8 in the preferred embodiment) they are grouped into subsets that form communication time slots employed by the actual system users.

Those skilled in the art will appreciate that vo-coding a voice at various coding rates may affect the perceived quality of the received speech. Accordingly, speech vo-coded in a 9.6 kbps sub-band coder may be of higher perceived quality than 2.4 kbps LPC coded speech. Therefore, the present invention contemplates grouping the 8 time sub-slots into subsets as required by the particular vo-coder utilized. An exemplary arrangement of slot assignments is illustrated in Figure 2 (reference 202). Sub-slots 1-4 have been combined to form slot 1a, which may provide toll quality speech for the users of a system. Slot 1b and slot 1c are formed by combining two sub-slots (5-6 and 7-8 respectively) that may provide speech of a lesser quality that is still acceptable to a particular user. Accordingly, the air-time billing rate may vary depending upon the quality of speech required in a particular user environment. Moreover, as technology improves and the quality of speech for a lower bit rate vo-coder is enhanced, further subdivisions may be readily employed since the system was designed originally to operate with a greater number of time slots (i.e., ultimately the 8 time sub-slots would be communication time slots).

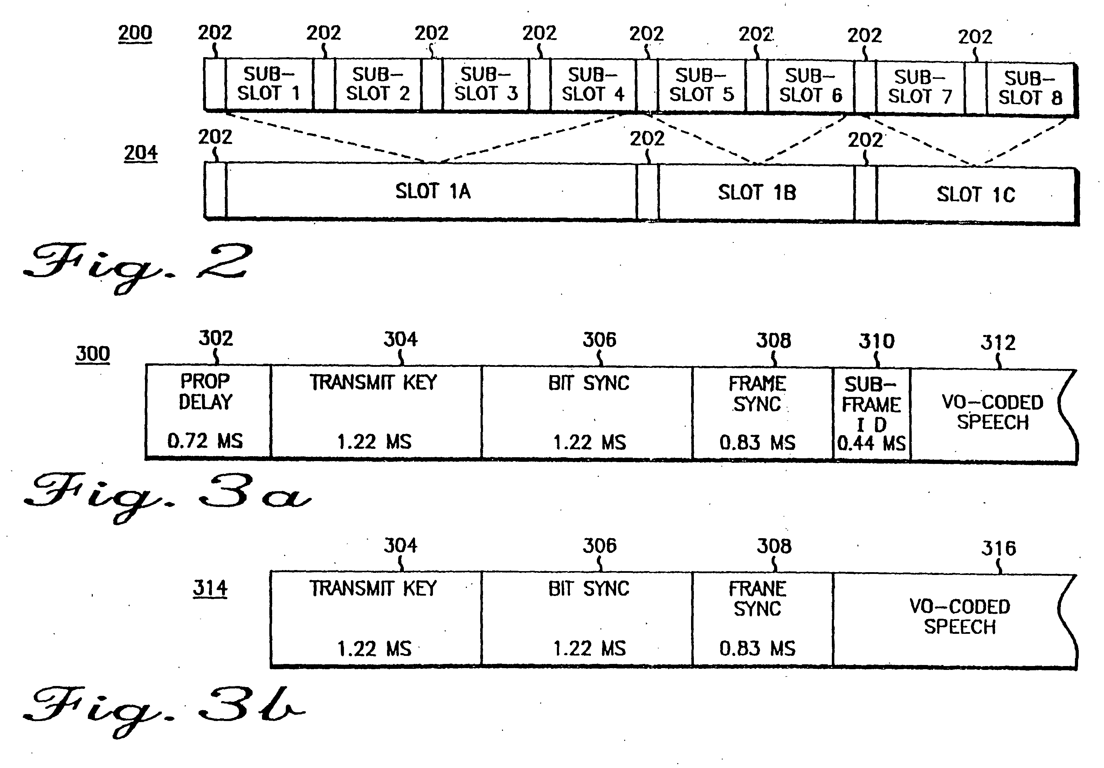

Referring now to Figures 3a and 3b, there is shown the preferred embodiment of the overhead data information (202 of Figure 2) for both the primary-to-remote, and remote-to-primary transmissions. Figure 3a illustrates the primary-to-remote data overhead 300. The data overhead begins with a propagation delay 302. Typically, the maximum propagation time delay will be defined by the particular system coverage designed into a particular implementation. Typically, system range is predominately responsible for determining the propagation delay. For example, the two-way propagation delay for distant remote units (60 miles) may be twelve bits with 18 kbps signalling. If the vo-coded signal received at the primary station (repeater) were simply repeated, the message delay would become a function of the distance of the transmitting remote unit. The receiving remote units would be required to correctly determine where the message information resided within the slot to correctly recover the voice message. Accordingly, the present invention contemplates a system wherein the primary station repeats the information at a fixed point in the slot. All remote units synchronize to the primary station's transmitted signal.

Following the propagation delay 302 is the transmit key time 304. The transmit key time 304 represents the time required to switch a unit between the transmit and receive frequency. This is typically considered to be a hardware limitation, and in the preferred embodiment is 1.22 milli-seconds (ms) in duration. Those skilled in the art will appreciate that the actual number of bits transmitted will depend on the data rate used. Of course, as improved power amplifiers and frequency synthesizers are designed, the transmit key time may decrease to a lesser duration. The bit synchronization pattern 306 follows the transmit key 304. The bit sync portion of the data over-head 300 represents a digital pattern required to obtain bit synchronization between a transmitting unit and a receiving unit. In the preferred embodiment, the bit sync portion 306 consists of 1.22 ms of an alternating logic-one logic-zero pattern. After acquiring bit synchronization, the receiving unit must also have frame synchronization tb properly decode one or more time slots. In the preferred embodiment of the present invention the frame synchronization portion 308 consists of a predetermined digital word. The receiving unit must correctly receive the frame sync portion 308 in a majority decision fashion (3 out of 5 in the preferred embodiment) in order to properly acquire frame synchronization. Synchronizing in this manner allows an acceptable system falsing rate utilizing a minimized number of data bits to form the synchronization word. After frame synchronization, the receiving remote unit receives the sub frame ID code 310. The subframe ID code contains information which is used by a remote unit to control and direct the receiving circuitry to operate on at least one TDM slot. Of course, as illustrated in Figure 2, the receiving remote unit may be informed, via the subframe ID 310, that it will group a plurality of time sub-slots into a single user slot. After correctly synchronizing and decoding an assignment to at least one TDM slot, the remote receives the vo-coded speech 312, which follows the data overhead 300.

In Figure 3b, the data overhead 314 for the remote-to-primary station transmission is illustrated. The data overhead 314 is similar to the data overhead 300 of Figure 3a except that the propagation delay 302 is not required since the primary station repeats all messages at the same point in the time slot, and the subframe ID 310 is not required since slot assignment is performed by the primary station (repeater). Following the frame synchronization portion 308 (of the remote-to-primary station data overhead 314) the remote unit transmits the vo-coded voice message.

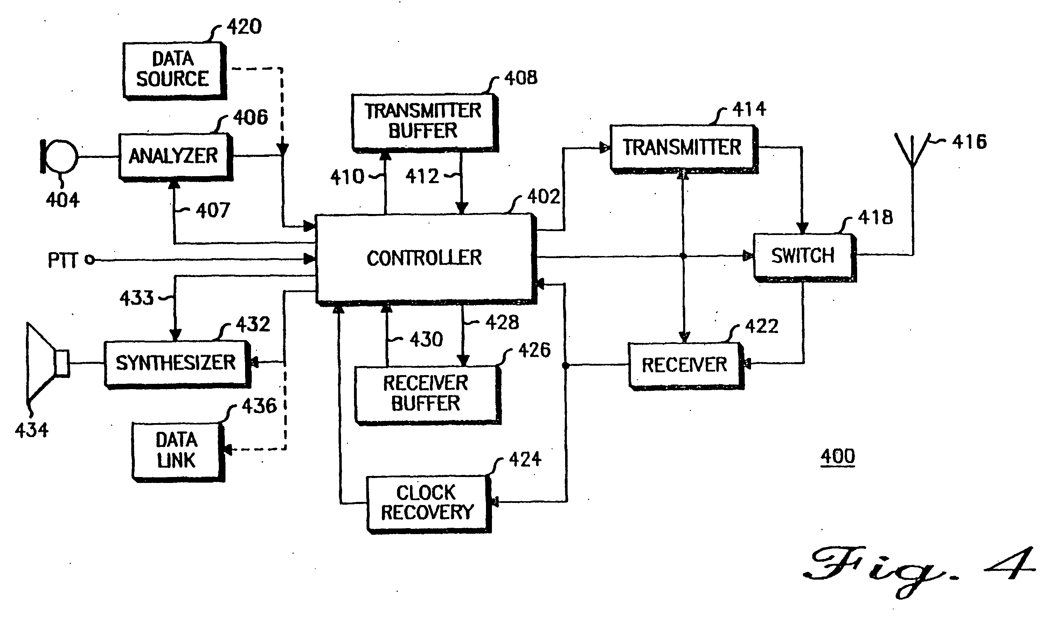

In Figure 4 there is shown a block diagram of a remote unit 400. The heart of the remote unit 400 is the controller 402 (a more detailed illustration and discussion of which follows hereinafter). To transmit, a speech signal is first input via a microphone 404. The speech is analyzed by a vo-ooder analyzer 406, which is enabled by the controller 402 via connection 407. The vo-coder analyzer may be any suitable coder and in the preferred embodiment is an LPC or SBC vo-coder. The controller 402 takes the vo-coded information, which is in digital form, and routes it to the transmit buffer 408 via data line 410. The digitized speech information is stored in the transmit buffer 408 at whatever coding rate is selected for the vo-coder analyzer 406. Typical examples of vo-coding data rates include, but are not limited to, 9.6, 4.8, and 2.4 kbps. When the transmit buffer 408 has reached a predetermined capacity limit, the information is extracted by the controller 402 via connection 412 and routed to the transmitter 414. Of course, the controller 402 preambles the speech information by the data overhead portion 202 as illustrated in Figure 2. The controller 402 couples the transmitter 414 to an antenna 416 via the switch 418. Alternatively, the switch 418 could be replaced with a duplexer (or the like) to continually couple the transmitter and receiver to the antenna. In this manner, the data overhead and speech information are transmitted at a selected transmission data rate, which must be at least twice that of the vo-coding data rate. Alternately, data information (already in digital form) may be transmitted in the same manner via data source 420. Moreover, a combination of vo-coded speech and data may alternatively be sent as determined by a particular user.

To receive information from a time slot, the controller 402 couples the antenna 416 to a receiver 422 via the switch 418. The receiver 422 is coupled both to the controller 402 and a clock recovery means 424, which may be any suitable clock recovery means that will synchronize the controller 402 to the received information using the bit sync or frame sync portions. Once synchronized, the controller 402 takes the received vacoded speech (or digital data) and routes it to the receive buffer 426 via connection 428. This information is clocked into the receive buffer 426 at a suitable data rate, which typically may be the transmission data rate. The information is extracted from receive buffer 426 via connection 430 and routed through the controller 402 to the vo-coding synthesizer 432. Of course, the information must be extracted at a data rate identical to that which the speech information was vo-coded. The synthesizer 432, enabled by the controller 402 by connection 433, operates on the essential speech components to synthesize the voice signal. This signal is applied to a speaker 434 that allows the message to be received by the operator. If, however, data was transmitted during a TDM slot, the data sink 436, which may be a printer or monitor device, accepts the data and displays it for the operator.

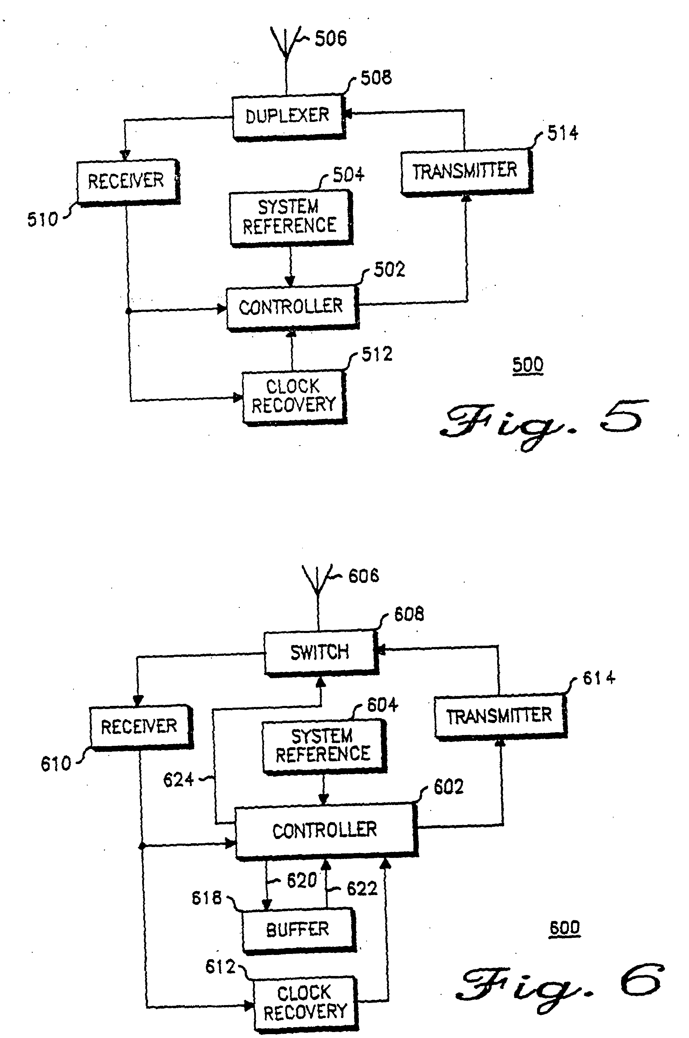

Referring now to Figure 5, there is shown a repeater 500 suitable for use in the TDM communication system of the present invention. The controller 502 controls the operation of the repeater 500. The system reference 504 provides the controller 502 with the clock signal, which is used to determine the transmission data rate. Operationally a vo-coded signal is received from at least one time slot on a first frequency and travels from the antenna 506 through the duplexer 508 to a receiver 510. The receiver 510 is coupled to a clock recovery device 512 and the controller 502. The controller accepts the received data signal from the receiver 510 at the data rate determined by the clock recovery device 512 and supplies it to the transmitter 514. The transmitter 514 repeats the signal including the overhead 202 in at least one time slot on second frequency (at a transmission data rate determined by the controller 502) through the duplexer 508 to the antenna 506.

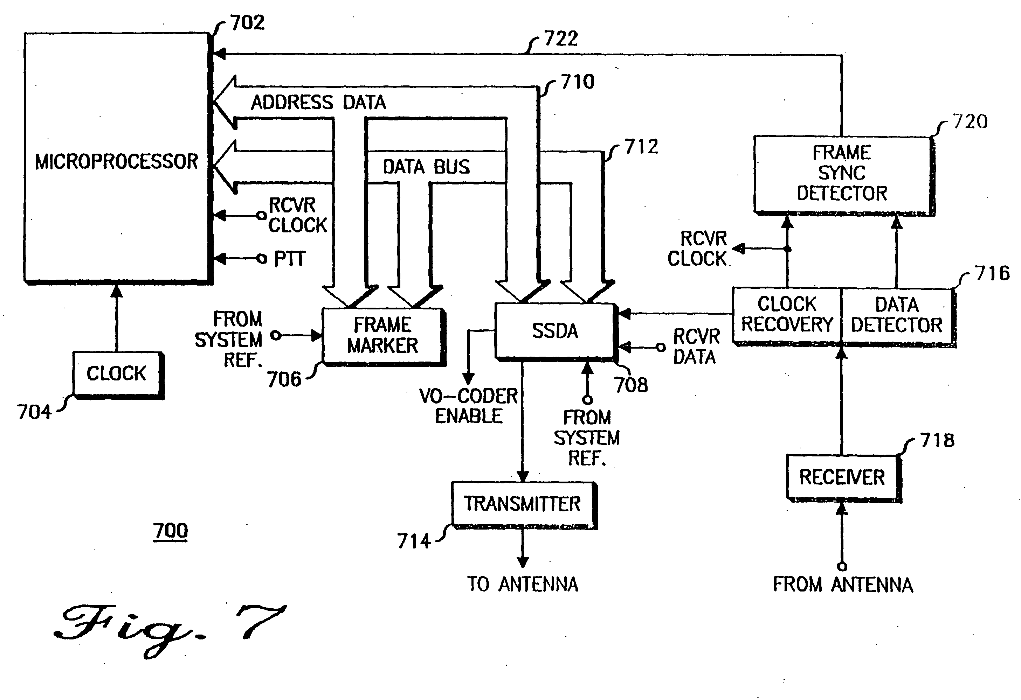

Referring now to Figure 6, a single frequency repeater (SFR) suitable for use in the TDM system of the present invention is shown. The repeater 600 is controlled by the controller 602, which takes a master clock signal from the system reference 604. A signal is received via antenna 606 and routed via the switch 608 to the receiver 610. The receiver 610 supplies signals to the clock recovery means 612 and the controller 602. The received vo-coded signal is stored in a buffer 618 via connection 620 at the received data rate as determined by the clock recover means 612. The vo-coded message is stored in the buffer 618 until a subsequent time slot, at which time the buffer 618 is emptied by the controller 602 via connection 622 at a predetermined data rate, which is typically the transmission data rate. The controller 602 then routes the buffered signal to the transmitter 614. The transmitter 610 sends the signal to the antenna 606 via the switch 608, which has been coupled to the transmitter via the controller 602 through connection 624. Accordingly, in an SFR, the transmitter 614 and receiver 610 are multiplexed to the antenna 606 a duplexer is not required. Those skilled in the art will appreciate that either the multiple frequency repeater or the single frequency repeater may be used alternately or in combination in any particular TDM system.

Referring now to Figure 7 there is shown a block diagram of a controller 700 suitable for use in either a primary or remote unit. The controller 700 is comprised of a microprocessor 702, such as an MC6801 manufactured by Motorola, Inc. The microprocessor 702 is supplied a clock signal by clock source 704. The system reference (see Figs. 5 and 6) is routed to the frame marker 706 and the Synchronous Serial Data Adaptor (SSDA) 708. Microprocessor 702 is coupled to the frame marker 706 and the SSDA 708 via an address bus 710 and a data bus 712. The frame marker 706 is used to generate the frame synchronization information contained in the data over-head as was described in conjunction with Figure 2. The frame marker 706 can be any convenient device and may be, for example, a programmable timer module (PTM), such as an MC6840 manufactured by Motorola, Inc. The SSDA 708 is used in the controller 700 to accept data from the microprocessor 702 and communicate the data serially to the transmitter 714. In the preferred embodiment, the SSDA is an MC6852 manufactured by Motorola, Inc. The SSDA 708 is also coupled to the clock recovery and data detector 716. The clock recovery data detector 716 is coupled to the receiver 718 and is used to supply the received synchronization information and received vo-coded voice signals to the SSDA 708. Thus, the SSDA is used in both the transmit and receive modes to route data accordingly. The clock recovery and data detector 716 is also coupled to the frame sync detector 720. The frame sync detector 720 receives data from the data detector and clock recovery device 716 and is used to look for the frame sync marker in the received vo-coded signal. When frame synchronization is achieved, the frame sync detector 720 alerts the microprocessor 702 via connection 722. Once the clock recovery device and the frame sync detector have both synchronized, the vo-coded signal can be either repeated (as in the primary stations of Figs 5 or 6), or received and routed to the vo-coder synthesizer to recover the voice signal (as in the remote unit of Fig. 4).

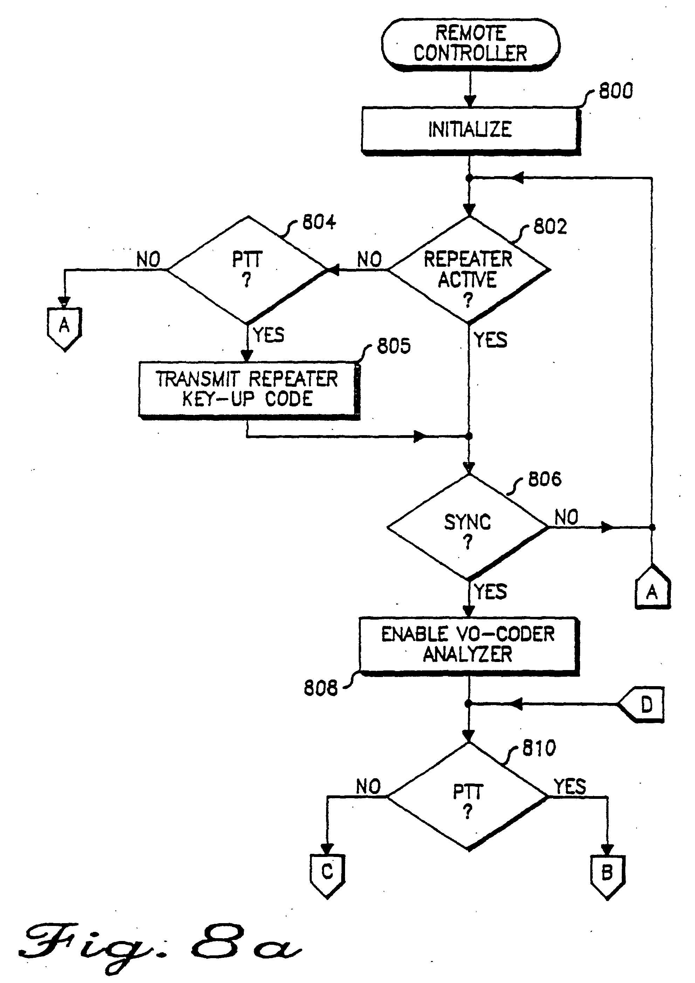

Referring now to Figures 8a-8c, there is shown a flow diagram of the steps executed by a controller utilized in a remote unit. In Figure 8a, the routine begins with the initialization step 800, which is executed during first time operation or after a reset. The initialization step 800 programs any frequency synthesizers and loads various ID codes that may be employed during the operation of the controller. The routine next proceeds to decision 802, which checks to see if the repeater is active. The remote unit determines if the repeater is active via the bit sync circuity that operates on the bit sync portion of the data overhead (see Figure 3). A positive bit sync indication occurs if the repeater is operating (i.e., transmitting). Of course, if the repeater were inactive, the remote unit would not be able to obtain bit sync.

Referring again to Figure 8a, if the repeater is not active the routine proceeds to decision 804 to detect whether the push-to-talk (PTT) switch has been actuated to initiate a communication. If the determination of decision 804 is that the PTT switch is not actuated, the routine returns to reference letter A and decision 802. The routine will continue in this loop until the switch is actuated at which time the routine proceeds to step 805. In step 805, the predetermined repeater key-up code is transmitter to activate the repeater. The key-up code may be any suitable code and, of course, if a particular implementation the repeater is always activated, step 805 could be omitted. In the preferred embodiment of the present invention, the repeaters are inactive (i.e., off the air) if no remote unit is transmitting. This conserves energy and increases the mean time between failure (MTBF) of the primary station. Of course, the repeaters could be designed to operate continuously thereby eliminating the need of an activation code. After transmitting the repear key-up code, the routine proceeds to decision 806. Decision 806 determines whether or not synchronization has been achieved. Both bit synchronization and frame synchronization are required for an affirmative determination in decision 806 (however, bit sync may have already been established in decision 802). Frame sync is determined by a majority determination based on a three-of-five correct receptions of the frame sync word (see Figure 3). If synchronization is established, the routine proceeds to step 808, which enables the analyzer of the particular vo-coder employed. Following the enabling of the vo-coder analyzer, the routine proceeds to decision 810, which determines whether the PTT switch has been activated. If the switch has been activated, the routine routes to reference letter B of Figure 8b (to transmit). If the PTT switch is not activated, the routine proceeds to reference letter C of Figure 8c (to receive).

Referring now to Figure 8b, the steps involved during the transmit mode of the controller are shown. The routine begins in step 812, which takes the digitized speech information from the vo-coding analyzer. The vo-coded speech is stored in the buffer (408 of Figure 4) in step 814 at the vo-coding data rate. Decision 816 determines whether the buffer is sufficiently full to begin transmitting. In the preferred embodiment, the buffer is deemed to be full (ready) when at least one-half of one slot of vo-coded data has been buffered. If decision 816 determines that the buffer is not sufficiently full, the routine returns to the reference letter B to receive more vo-coded speech from the analyzer in step 812. If the determination of decision 816 is that the buffer is sufficiently full, the routine proceeds to decision 818 to determine whether the present time slot is the assigned slot of a particular unit. The time slots must be assigned so that the mobile controller knows how many of the sub-slots (1-8) to combine for this particular communication slot. If the present time slot is not the unit's assigned time slot, the routine proceeds to decision 817 to check for sync. If decision 817 determines that sync has been lost, the routine proceeds to reference letter A. Otherwise, the routine proceeds to reference letter B. If decision 818 determines that the present time slot is the unit's assigned time slot, the routine proceeds to step 819, to determine whether the unit is still in frame sync. The unit will have a valid frame sync if it has correctly received five of the past nine frame sync words. If decision 819 determines that the unit has dropped frame sync, control returns to reference letter B. If the unit has held sync, the routine proceeds to step 820, which formats the data overhead preamble as previously described in conjunction with Figure 3. Following the data overhead formatting of step 820, step 822 transmits a single burst on the TDM channel by transmitting the overhead and vo-coded speech taken from the buffer at the transmission data rate. After this single slot is burst on to the TDM channel, decision 824 determines whether the buffer is empty. If the buffer is not empty, the routine returns to reference letter B which takes more speech and continues to transmit. If the buffer is empty, the routine returns to reference letter A of Figure 8a which determines whether the repeater is active.

In Figure 8c, the steps executed by the mobile controller for the receive operation are shown. Routine begins in step 826 which receives the vo-coded signal from one or more time slots in the TDM channel. Step 828 updates the slot assignments for the device employing the controller. In the preferred embodiment, this represents updating a memory location which contains the number of sub-slots (1-8) that may be combined in various arrangements to form communication slots for the TDM device. The routine next proceeds to decision 830 to determine whether or not synchronization has been maintained. An affirmative determination results if the unit has correctly received five of the past nine frame sync words. If there is synchronization, the routine proceeds to decision 832 to determine whether the communication device is muted or whether the squelch is open to allow reception of the message. Those skilled in the art will appreciate various methods of squelch are known. One technique would consist of detecting whether the received signal is valid data or noise. An alternative would be to use a form of continuous squelch, commonly referred to as "digital private line" (DPL). Another alternative would be to employ begin-of-message (BOM) and end-of-message (EOM) data words pro-ambled and post-ambled to the message, respectively. Basically, any suitable squelch system is acceptable to the present invention to operate as decision 832. If the squelch is muted, the routine returns to reference letter D of Figure 8a. However, if the squelch is unmuted the routine proceeds to set 834 where the vo-coded signal is placed in the buffer (426 of Figure 4) at the received data rate. Step 836 removes the buffered signal from the buffer at the vo-coding data rate and presents it to the vo-coding synthesizer (432 in Figure 4). The vo-coding synthesizer reconstructs the original voice message and presents it to the operator either via a speaker of other means. Following the completion of the synthesized message, the routine returns to reference letter D of Figure 8a.

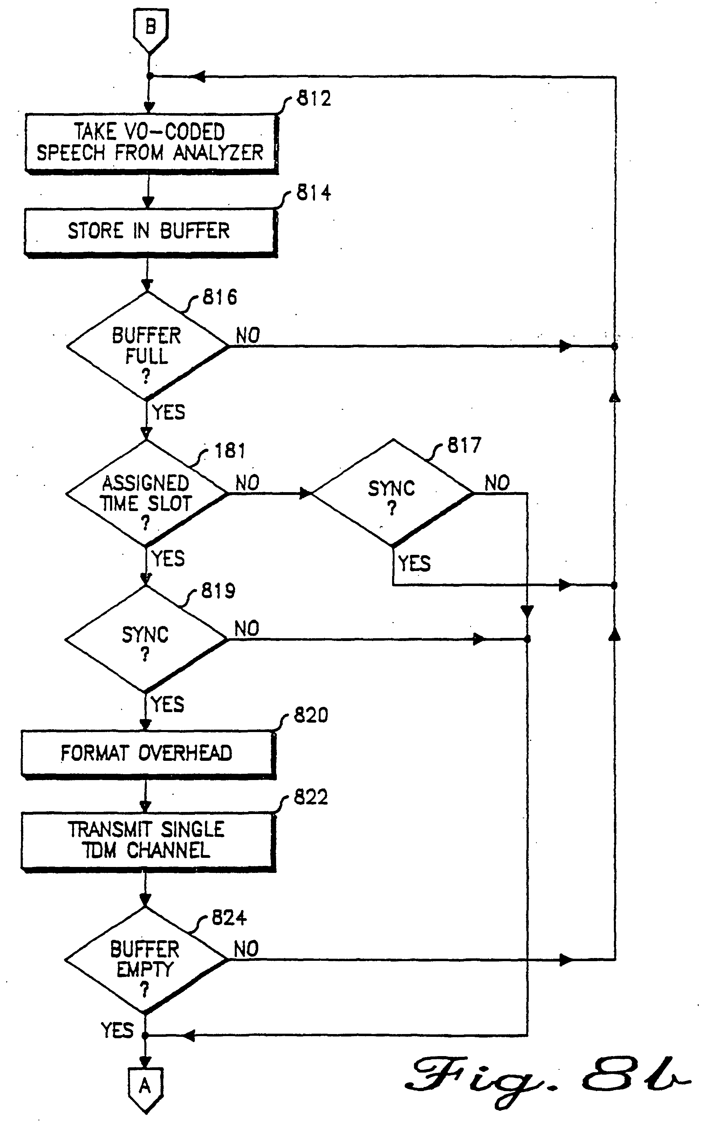

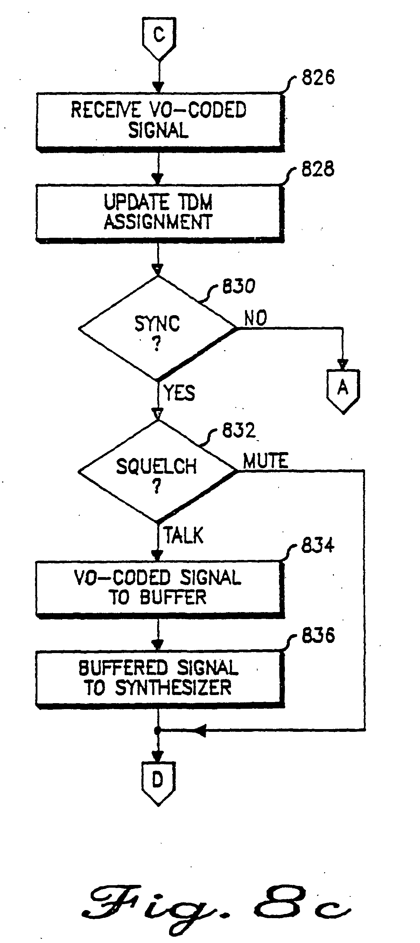

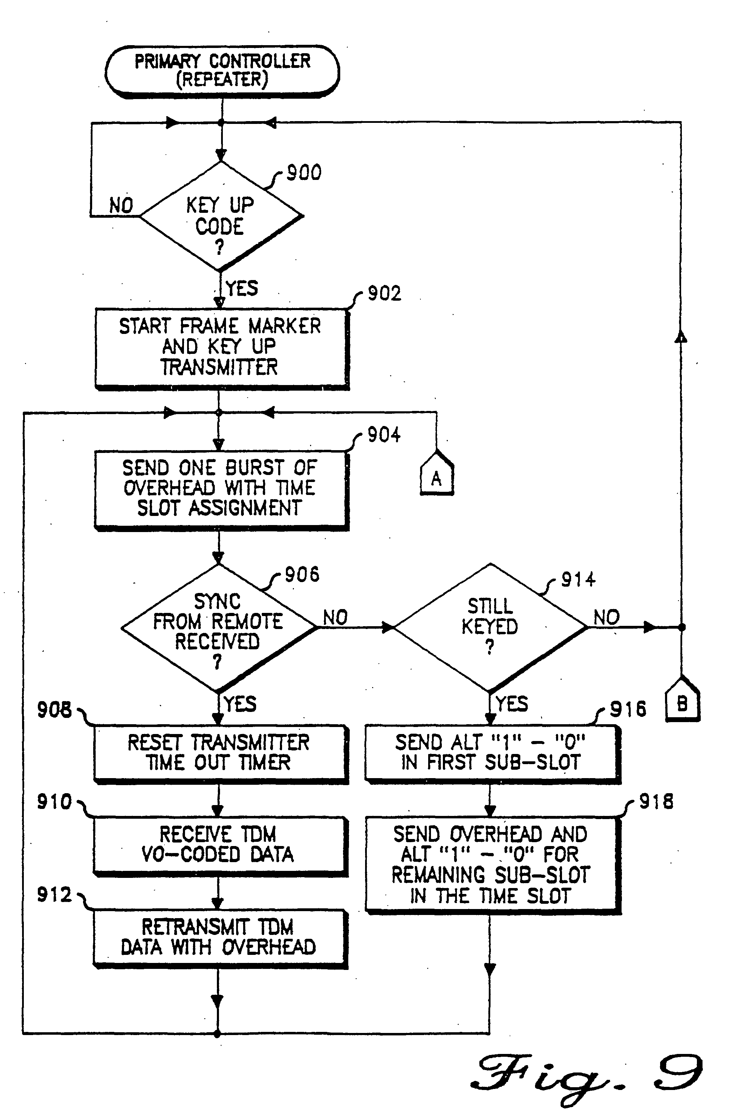

Referring now to Figure 9, the steps executed by the primary controller (repeater) are illustrated. The routine begins in decision 900, which determines whether the key up code has been received from a particular remote unit. If the key up code is not received, the repeater waits (i.e., off the air) until a key up code is received. Assuming, however, that the key up code was received, the routine proceeds to step 902, which starts the frame marker and keys up the transmitter. Step 904 transmits one burst of the data overhead defined in Figure 3 containing the TDM slot assignment for the remote unit. After the remote unit receives sync and a slot assignment, the remote unit transmits the data overhead and TDM vo-caded data message to the repeater. Accordingly, decision 906 determines whether the synchronization (both bit and frame) from the mobile has been received in the present time slot. If sync has been received, the routine proceeds to step 908, which resets a transmitter time-out-timer, which may be present to prevent the transmitter from transmitting either permanently or for prolonged periods. The routine then proceeds to step 910, which receives the TDM vo-coded data from the particular slot (or group of slots) assigned by the repeater. Step 912 retransmits or repeats the TDM data in another time slot on either the same frequency or in the same or different time slot on a second frequency depending upon which type of repeater is employed. Following the retransmission of step 912, the routine returns to reference letter A, which again sends one burst of data overhead with the time slot assignment and continues in this loop until there is no more vo-coded data to transmit.

Referring again to decision 906, if the decision of step 906 is that the synchronization was not received in the present time slot, the routine proceeds to decision 914, which determines whether or not the repeater transmitter is still keyed. The repeater transmitter may not be keyed if the time-out-timer has expired or a dekey code has been received (if any such code is employed). If the determination of decision 914 is that the repeater is still keyed, an alternating logical one and logical zero pattern are transmitted in the first sub-slot in step 916. Following step 916 the data over-head and slot assignment are transmitted in each of the sub-slots that form the particular time slot used. Since the data over-head will not fill a sub-slot, an alternating logical one and logical zero pattern is used to fill each sub-slot. Following step 918 the routine returns to reference letter A, which will again send one burst of data overhead with the time slot assignment to the mobile unit, and then to decision 906 to recheck if the repeater has properly received synchronization from the remote unit. If the determination of decision 914 is that the repeater is no longer keyed, the routine returns to reference letter B, which again will await the key up code before the repeater is operational again.

## Claims

1. A method for efficiently utilizing the spectrum of radio frequency communication channels (200) used to communicate vo-coded voice signals in a time division multiplex communication system (100) which apportions narrow-band radio frequency communication channels (200) into at least two time slots for communicating vo-coded voice signals to achieve a full duplex communication - effect, each channel having a predetermined maximum data rate, C, the method comprising the steps of:
(a1) in a first vo-coding means (406) of a first remote unit (400), analyzing at a first selected coding rate, V, voice signals of a communication from a first user for providing vo-coded signals at a selected one, V, coding data rate available to communicate such voice signals in said communication system and including means for preambling at least a synchronization signal to said vo-coded signal;
(b) the system establishing a time division multiplex protocol defining N time slots of equal lengths, where N is a positive integer less than or equal to CN;
(c1) in the said first remote unit (400), buffering (408) said vo-coded signals to provide buffered signals;
(d1) the said first remote unit (400) transmitting (414) said buffered signals at a transmission rate of at least twice the first selected coding rate of step (a1), in at least one of said N time slots;
(e1) receiving vo-coded signals in a receiving means (422) of the said first remote unit (400) during at least one of said N time slots at the data rate of step (d1) to provide received signals, including the step of synchronizing said receiving means to said received signals (424);
(f1) buffering (426) said received signals in the said first remote unit (400), to provide buffered received signals; and
(g1) synthesizing recovered voice signals from said buffered received signals in a synthesizing means (432) in the said first remote unit (400) at the data rate of step (a1);
(a2) in a second vo-coding means of a second remote unit (400), analyzing at a second selected rate, V', voice signals of a communication from a second user for providing further vo-coded signals at said second selected rate, V' , different from said first selected coding rate, V, available to communicate such voice signals in said communication system and including means for preambling at least a synchronization signal to said further vo-coded signal;
(c2) in the said second remote unit (400), buffering (408) said further vo-coded signals to provide further buffered signals;
(d2) the said second remote unit (400) transmitting (414) said further buffered signals in at least one of the said N time slots, at a transmission rate which is the same as the transmission rate in step (d1);
(e2) receiving further vo-coded signals in a receiving means (422) of the said second remote unit (400) during at least one of said N time slots at the transmission rate of step (d2) to provide further received signals including the step of synchronizing said receiving means to said received signals;
(f2) buffering (426) said further received signals in the said second remote unit (400), to provide further buffered received signals; and
(g2) synthesizing recovered voice signals from said further buffered received signals in a synthesizing means (432) in the said second remote unit (400) at the second selected rate, V, of step (a2);
(h) the system apportioning time among users according to the fraction of the channel required at various voice encoding rates.

## Patentansprüche

1. Verfahren zur wirkungsvollen Ausnutzung des Spektrums von Funkfrequenz-Übertragungskanälen (200) zur Übermittlung von vocodierten Sprachsignalen in einem im Zeit-Multiplexbetrieb arbeitenden Nachrichten-Übertragungssystem (100), das schmalbandige Funkfrequenz-Übertragungskanäle (200) auf mindestens zwei Zeitschlitze zum Übertragen von vocodierten Sprachsignalen aufteilt, um eine vollständige Duplex-Übertragungswirkung zu erreichen, wobei jeder Kanal eine vorgegebene maximale Datenrate C aufweist und das Verfahren die folgenden Schritte umfasst:
(a1) in einer ersten Vocodiereinrichtung (406) einer ersten entfernten Einheit (400), Analysieren von Sprachsignalen einer Nachrichtenübertragung von einem ersten Benutzer bei einer ersten gewählten Codierrate V, um vocodierte Signale bei einer gewählten Codierdatenrate V bereitzustellen, die verfügbar ist, um derartige Sprachsignale in dem Nachrichtenübertragungssystem zu übertragen, wobei sie eine Einrichtung enthält, die dem vocodierten Signal mindestens ein Synchronisiersignal voranstellt.
(b) Einrichten des Zeit-Multiplexprotokolls, das N Zeitschlitze gleicher Länge definiert, durch das System, wobei N eine positive ganze Zahl ist, die kleiner oder gleich CN ist;
(c1) in der ersten entfernten Einheit (400), Puffern (408) der vocodierten Signale, um gepufferte Signale bereitzustellen;
(d1) Senden (414) der gepufferten Signale mit einer Übertragungsrate, die wenigstens das Zweifache der ersten ausgewählten Codierrate aus Schritt (a1) ausmacht, in wenigstens einem der N Zeitschlitze durch die erste entfernte Einheit (400);
(e1) Empfangen vocodierter Signale in einer Empfangseinrichtung (422) der ersten entfernten Einheit (400) während wenigstens einem der N Zeitschlitze mit der Datenrate aus Schritt (d1), um empfangene Signale bereitzustellen, wobei dies den Schritt des Synchronisierens der Empfangseinrichtung auf die empfangenen Signale (424) einschließt;
(f1) Puffern (426) der empfangenen Signale in der ersten entfernten Einheit (400), um gepufferte empfangene Signale bereitzustellen; und
(g1) Synthetisieren wiedergewonnener Sprachsignale aus den gepufferten empfangenen Signalen in einer Synthetisierungseinrichtung (432) in der ersten entfernten Einheit (400) mit der Datenrate aus Schritt (a1);
(a2) in einer zweiten Vocodiereinrichtung einer zweiten entfernten Einheit (400), Analysieren von Sprachsignalen einer Nachrichtenübertragung von einem zweiten Benutzer mit einer zweiten ausgewählten Rate V', um weitere vocodierte Signale mit der zweiten ausgewählten Rate V' bereitzustellen, die sich von der ersten ausgewählten Codierrate V unterscheidet, die zum Übertragen dieser Sprachsignale in dem Nachrichtenübertragungssystem zur Verfügung steht, und wobei sie eine Einrichtung enthält, die dem weiteren vocodierten Signal wenigstens ein Synchronisiersignal voranstellt.
(c2) in der zweiten entfernten Einheit (400), Puffern (408) der weiteren vocodierten Signale, um weitere gepufferte Signale bereitzustellen;
(d2) Senden (414) der weiteren gepufferten Signale in wenigstens einem der N Zeitschlitze mit einer Übertragungsrate, die die gleiche ist wie die Übertragungsrate in Schritt (d1) durch die zweite entfernte Einheit (400);
(e2) Empfangen weiterer vocodierter Signale in einer Empfangseinrichtung (422) der zweiten entfernten Einheit (400) während wenigstens einem der N Zeitschlitze bei der Übertragungsrate von Schritt (d2), um weitere empfangene Signale bereitzustellen, wobei dies den Schritt des Synchronisierens der Empfangseinrichtung auf die empfangenen Signale einschließt;
(f2) Puffern (426) der weiteren empfangenen Signale in der zweiten entfernten Einheit (400) um weitere gepufferte empfangene Signale bereitzustellen; und
(g2) Synthetisieren wiedergewonnener Sprachsignale aus den weiteren gepufferten empfangenen Signalen in einer Synthetisiereinrichtung (432) in der zweiten entfernten Einheit (400) mit der zweiten ausgewählten Rate V' aus Schritt (a2);
(h) gleichmäßiges Verteilen von Zeit zwischen Benutzern entsprechend dem Anteil des Kanals, der bei verschiedenen Sprachcodierraten erforderlich ist, durch das System.

## Revendications

1. Procédé permettant d'utiliser efficacement le spectre de canaux, de communication de radiofréquence (200) employés pour transmettre des signaux vocaux vocalement codés dans un système de communication par multiplexage temporel (100), qui partage les canaux de communication de radiofréquence à bande étroite (200) en au moins deux tranches de temps en vue de la transmission de signaux vocaux vocalement codés pour obtenir un effet de communication en duplex intégral, chaque canal ayant un débit de données maximal prédéterminé, soit C,
le procédé comprenant les opérations suivantes :
(a1) dans un premier moyen de codage vocal (406) d'une première unité éloignée (400), analyser avec un premier débit de codage sélectionné, soit V, les signaux vocaux d'une communication émanant d'un premier utilisateur afin de produire des signaux vocalement codés avec un débit de données de codage, soit V, disponible pour transmettre ces signaux vocaux dans ledit système de communication et comportant un moyen destiné à annexer, audit signal vocalement codé, un préambule comprenant au moins un signal de synchronisation ;
(b) le système établissant un protocole de multiplex temporel définissant N tranches de temps de longueurs égales, où N est un nombre entier inférieur ou égal à C/V ;
(c1) dans ladite première unité éloignée (400), enregistrer en tampon (408) lesdits signaux vocalement codés afin d'obtenir des signaux enregistrés en tampon ;
(d1) ladite première unité éloignée (400) émettant (414) lesdits signaux enregistrés en tampon avec un débit d'émission au moins égal à 2 fois le premier débit de codage sélectionné de l'opération (a1), dans au moins l'une desdites N tranches de temps ;
(e1) recevoir des signaux vocalement codés dans un moyen de réception (422) de ladite première unité éloignée (400) pendant au moins l'une desdites N tranches de temps avec le débit de données de l'opération (d1) afin de produire des signaux reçus, cette opération comprenant l'opération qui consiste à synchroniser ledit moyen de réception sur lesdits signaux reçus (424) ;
(f1) enregistrer en tampon lesdits signaux reçus dans ladite première unité éloignée (400), afin de produire des signaux reçus enregistrés en tampon ; et
(g1) synthétiser des signaux vocaux reconstitués, à partir des signaux reçus enregistrés en tampon, dans un moyen de synthèse (432) de ladite première unité éloignée (400), avec le débit de données de l'opération (a1) ;
(a2) dans un deuxième moyen de codage vocal d'une deuxième unité éloignée (400), analyser, avec un deuxième débit sélectionné, soit V', les signaux vocaux d'une communication venant d'un deuxième utilisateur afin de produire d'autres signaux vocalement codés avec ledit deuxième débit sélectionné, V', qui est différent dudit premier débit de codage sélectionné, V, disponible pour transmettre lesdits signaux vocaux dans ledit système de communication et comportant un moyen qui sert à annexer, audit autre signal vocalement codé, au moins un signal de synchronisation ;
(c2) dans ladite deuxième unité éloignée (400), enregistrer en tampon (408) lesdits autres signaux vocalement codés afin de produire d'autres signaux enregistrés en tampon ;
(d2) ladite deuxième unité éloignée (400) émettant (414) lesdits autres signaux enregistrés en tampon dans au moins l'une desdites N tranches de temps, avec un débit d'émission qui est le même que le débit d'émission de l'opération (d1) ;
(e2) recevoir d'autres signaux vocalement codés dans un moyen de réception (422) de ladite deuxième unité éloignée (400) pendant au moins l'une desdites N tranches de temps avec le débit d'émission de l'opération (d2) afin de produire d'autres signaux reçus, comportant l'opération consistant à synchroniser ledit moyen de réception sur lesdits signaux reçus ;
(f2) enregistrer en tampon (426) dans ladite deuxième unité éloignée (400), lesdits autres signaux reçus afin de produire d'autres signaux reçus enregistrés en tampon ; et
(g2) synthétiser un signal vocal reconstitué, à partir dudit autre signal reçu enregistré en tampon, dans un moyen de synthèse (432) de ladite deuxième unité éloignée (400), avec le deuxième débit sélectionné, V', de l'opération (a2) ;
(h) le système divisant le temps entre les utilisateurs en fonction de la fraction du canal nécessaire aux divers débits de codage vocal.
